# EUROPEAN PATENT APPLICATION

(11) **EP 1 876 807 A1**
(43) Date of publication of application: **09.01.2008**
(21) Application number: 06014130.6
(22) Date of filing: 07.07.2006
(51) Int. Cl.: H04M 3/487, G06Q 30/00, H04Q 7/22

(54) **Supplying information to mobile telephone users**

(71) Applicant: Koninklijke KPN N.V., 2516 CK The Hague (NL)
(72) Inventor: van der Burg, Johannes Cornelis, 2681 EN MONSTER (NL)
(74) Representative: Wuyts, Koenraad Maria

(57) **Abstract**

A method of supplying information to mobile telephone users comprises the steps of providing a set of first parameters reflecting actual mobile telephone user properties, providing a set of second parameters reflecting desired mobile telephone user properties, forming a target group of mobile telephone users by selecting mobile telephone users whose second parameters match the first parameters, and transmitting a message containing the information to the mobile telephones of the target group. The actual mobile telephone user properties comprise subscription properties, user settings, and location information. Usage data may also be involved. The subscription properties and the user settings may be obtained from a home location register. The location information may comprise both national location information obtained from a home location register (10) and international location information obtained from a roaming and welcoming system (16).

## Description

### FIELD OF THE INVENTION

The present invention relates to supplying information to mobile telephone users. More in particular, the present invention relates to a method of and a system for supplying information, such as promotional or assistance information, to the users of mobile (US: cellular) telephone apparatus, such as GSM or UMTS apparatus.

### BACKGROUND

It is often desirable to make information available to users of mobile telephones, for example information concerning preferred foreign networks or discount calling hours, but also tourist information or local emergency numbers.

United States Patent Application US 2002/0050927 discloses a method of providing a user of a mobile telephone, or a group of users, with a message containing user-dependent information. The current location of the telephone is determined using a GPS (Global Positioning System) coordinate identifier, a GSM (Groupe Spéciale Mobile) cell identifier, or a location identifier associated with a public electronic display, such as an electronic billboard. A user profile comprising the user's interests is stored on a server, but how the user profile is compiled is not disclosed. The message is not sent to the mobile telephone but is displayed on the electronic billboard. Users are targeted because of their location, that is, their proximity to the public electronic display. In the absence of a public electronic display, this known method is of little use.

United States Patent Application US 2005/0186939, the entire contents of which are herewith incorporated in this document, discloses a method of providing management of roaming mobile telephones, the management including the sending of messages to the roaming mobile telephones to leverage their usage. An activity log of calls per roaming mobile telephone is produced using a probe which gathers international signalling information. A database and associated logic arrange signalling data to produce a record that indicates how a particular telephone is used when roaming. In addition to signalling information, intercepted roaming call data records (CDRs) may be available. Users are targeted because of their roaming activities: the probe collects only data exchanged between the roaming network and the home network. This known method is therefore not suitable for targeting users on the basis of other activities or properties.

### AIM OF THE INVENTION

It is an object of the present invention to overcome these and other problems of the Prior Art and to provide a method of and a system for supplying information to mobile telephone users which allows a better selection of the user or users to which information is sent.

### SUMMARY OF THE INVENTION

Accordingly, the present invention provides a method of supplying information to mobile telephone users, the method comprising the steps of:
- providing a set of first parameters reflecting desired mobile telephone user properties,
- providing a set of second parameters reflecting actual mobile telephone user properties,
- forming a target group of mobile telephone users by selecting mobile telephone users whose second parameters matches the set of first parameters, and
- transmitting a message containing the information to the mobile telephones of the target group,
wherein the actual mobile telephone user properties comprise:
- subscription properties,
- user settings, and
- location information.
By providing a set of (second) parameters indicative of actual properties of the mobile telephone users and matching those parameters with a set of (first) parameters indicative of desired properties, a target group consisting of mobile telephone users having the desired properties can be formed. In accordance with the present invention, the parameters correspond with the properties usage data, subscription properties, user settings and/or location information. These properties allow an excellent target group selection, subscription properties indicating for example subscription type including privileges, user settings indicating for example call forwarding settings, and location information indicating for example present or most recent location of the user. Although the actual mobile telephone user properties preferably comprise the entire group consisting of subscription properties, user settings and location information, in some embodiments one or more of these elements of the group may be omitted, for example the subscription properties.

In a preferred embodiment, the subscription properties, the user settings and the (national) location information are obtained from a home location register.

In the present invention, the location information preferably comprises both national location information obtained from the home location register and international location information obtained from a roaming and welcoming system. In this way, both national and international location information may be used to determine the target group, thus allowing a better target group selection.

The location information preferably comprises Global Title Address (GTA) information, which allows a more precise location detection than Prior Art methods. As a result, the present invention allows a very accurate targeting of mobile telephone users.

The method of the present invention may additionally utilize usage data, indicating for example the (aggregate) time duration of calls. The usage data may also be used to provide a pre-selection: a "pre-defined" target group may be provided, based on usage data, which target group may further be refined using the subscription properties, user settings, and location information mentioned above.

The usage data are preferably obtained from an administrative register, such as a billing system, since billing systems typically keep detailed records of data indicating mobile telephone usage over an extended period.

It will be understood that the information is sent to the mobile telephones in order to be read or heard by their users. For convenience, this may also be expressed as sending the information to the users, without mentioning the telephone devices explicitly.

The method of the present invention allows the right message to be transmitted to the right users at the right locations. In a preferred embodiment, the set of criteria associated with the mobile telephone user property further includes a time and date criterion, and the step of transmitting the message further includes matching the time and date criterion with the actual time and date. This allows the right message to be transmitted to the right users at the right locations and at the right time and date. In particular, sending messages during the night or during religious ceremonies may be avoided, and as promotional campaigns typically have a limited duration, it can be ensured that the information associated with the campaigns is sent during the campaign only.

The step of forming a target group of mobile telephone users may additionally involve skipping mobile telephone users whose user settings include a message barring indication. Such a message barring indication, which is typically registered in response to a user request, marks the user's desire not to receive promotional information. Additionally, or alternatively, a double detection indication may be provided to prevent the same message being sent twice to the same user.

Various types of information may be transmitted to the users. It is preferred that the information is promotional information, travel information and/or customer support information. Promotional information may be related to reduced rates, for example at certain hours, collect call services, preferred networks, etc.. Travel information may include traffic problems such as traffic jams and diversions, recommended sights, accommodation information, etc., while customer support information may help the users to correct erroneous settings, or may provide assistance when roaming in foreign networks.

Although in the method of the present invention the target group is formed by selecting users on the basis of their properties, it is also possible to provide a predetermined target group. That is, data identifying the users of a specific target group may be determined prior to the step of forming a target group. In particular usage data may be utilized for this purpose, as already mentioned above. The predetermined target group may be used in addition to, or instead of, the regular target group produced in the step of forming a target group. In this way, users may be addressed who lack a common available property. More in particular, the absence of a certain property may be an advantageous criterion for forming a target group.

The present invention also provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention additionally provides a system comprising:
- a first parameter unit for providing a set of first parameters reflecting desired mobile telephone user properties,
- a second parameter unit for providing a set of second parameters reflecting actual mobile telephone user properties,
- a selection unit for forming a target group of mobile telephone users by selecting mobile telephone users whose second parameters match the set of first parameters, and
- a transmission unit for transmitting a message containing the information to the mobile telephones of the target group,
wherein the actual mobile telephone user properties comprise:
- subscription properties,
- user settings, and
- location information.
The system according to the present invention has the same advantages as the method discusses above.

It is preferred that the subscription properties, the user settings and the (national) location information are obtained from a home location register. The location information may comprise both national location information obtained from the home location register and international location information obtained from a roaming and welcoming system. It is further preferred that the usage data are obtained from an administrative system, such as a billing system.

### BRIEF DESCRIPTION OF THE DRAWING FIGURES

Further embodiments of the system according to the present invention will become apparent from the description below.

The present invention will further be explained below with reference to exemplary embodiments illustrated in the accompanying drawings, in which:
Fig. 1 schematically shows an exemplary embodiment of an information supply system according to the present invention.
Fig. 2 schematically shows a system for mobile telecommunication in which an information supply system of the present invention is used.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

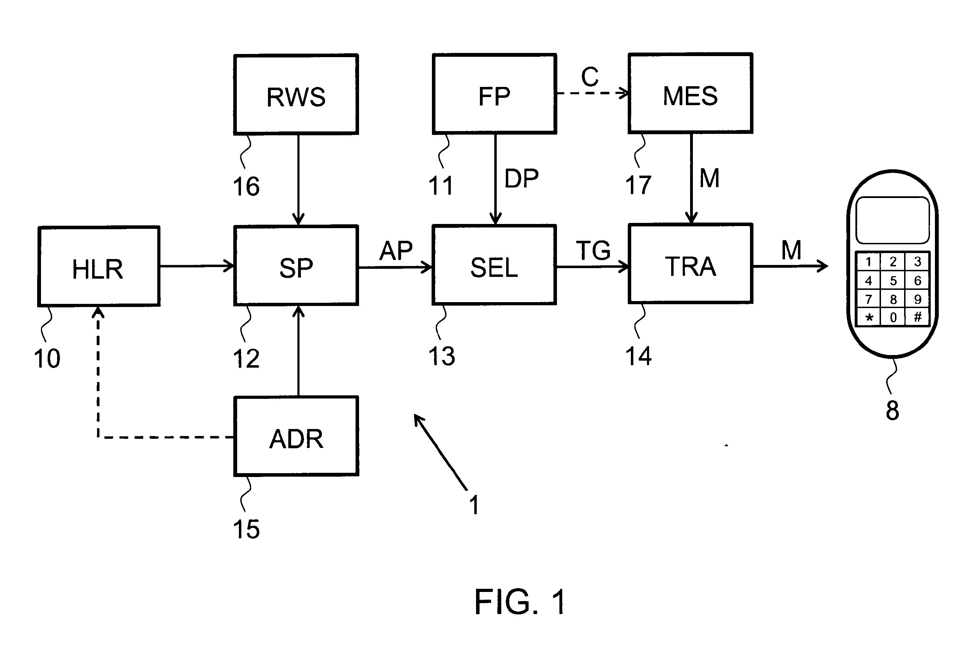

The system 1 shown merely by way of non-limiting example in Fig. 1 comprises a home location register (HLR) unit 10, a first parameters (FP) unit 11, a second parameters (SP) unit 12, a selection (SEL) unit 13, a transmission (TRA) unit 14, an administrative register (ADR) unit 15, a roaming and welcoming system (RWS) unit 16, and a message (MES) unit 17.

The home location register (HLR) 10, which may be known *per se,* collects and stores data related to properties of mobile telephone users, typically "technical" properties such as user settings. Such user properties are represented and stored in the home location register as series of parameters, each series being associated with a group of mobile telephone users having similar subscription characteristics. The number of parameters per user may vary depending on the implementation of the home location register, but may exceed 100 parameters and may even exceed 200 parameters. Accordingly, the parameters stored in a home location register provide a large number of actual user properties. A visiting location register (VLR, not shown) may be provided in the home location register 10 to identify the last known location of the user. This location may be represented by a so-called Global Title Address (GTA).

Part of the parameters stored in the home location register may originate from an administrative register, for example from the administrative register unit 15, as indicated in Fig. 1.

The administrative register (ADR) unit 15 may include a billing system holding usage data for each user, in particular call data record (CDR) data, such as (aggregate and/or individual) call durations, charges, and/or reduced rates. The administrative register 15 may be directly coupled to the second parameters unit 12, or may be indirectly coupled via a manual interface.

The first parameters unit 11, which serves to determine the user properties to be selected, provides a set of first or desired parameters FP to the selection unit 13. The first parameters represent desired properties of mobile telephone users to which information is to be sent. The first parameters may be predetermined externally and stored in the unit 11. In other embodiments, the first parameters may be determined interactively, either by an operator or by a suitable software program, by choosing suitable parameters from available parameters.

The second parameters unit 12 provides a set of second or actual parameters AP which correspond with actual properties of the mobile telephone users. The second parameters AP are obtained from various sources: the home location register (HLR) 10, the administrative register (ADR) 15 and the roaming and welcoming system (RWS) 16.

In accordance with the present invention, the home location register 10 provides subscription properties, user settings and national location information, the administrative register 15 provides usage data, while the roaming and welcoming system 16 provides international location information. These properties are combined and processed in the second parameters unit 12 to produce second or actual parameters AP. In a preferred embodiment, the actual parameters AP include location information including Global Title Addresses (GTAs).

The selection unit 13 matches the second, actual parameters AP with the first, desired parameters DP received from the first parameters unit 11 to produce data identifying a target group TG. In addition, the selection unit 13 may match the mobile telephone users of the target group with message barring indications, which may also be comprised in the second parameters and may be obtained from the home location register.

In addition, the selection unit 13 may be provided with a double detection prevention mechanism to avoid sending the same (or a similar) message to the same user twice. This may be achieved by checking a target group against a stored list of logged actions. Such lists may be deleted after a certain number of hours or days, to re-allow the transmission of information to users.

The message unit 17 provides a suitable message M containing the desired information and relating to the first set of parameters provided by the first parameters unit. To this end, the message unit 17 may receive suitable control information C from the first parameters unit 11 in order to select or compose a message M corresponding with the target group. The message M typically is a text message containing information relevant to the user, for example promotional information, customer support information and/or travel information.

Accordingly, the transmission unit 17 transmits the message to the mobile (US: cellular) telephone devices 8 of the target group. It will be understood that the transmission unit 17 may be coupled to a short message service (SMS) centre (not shown in Fig. 1) and an intermediary network (not shown).

It will further be understood that the components of the system 1 may be implemented in software and/or hardware.

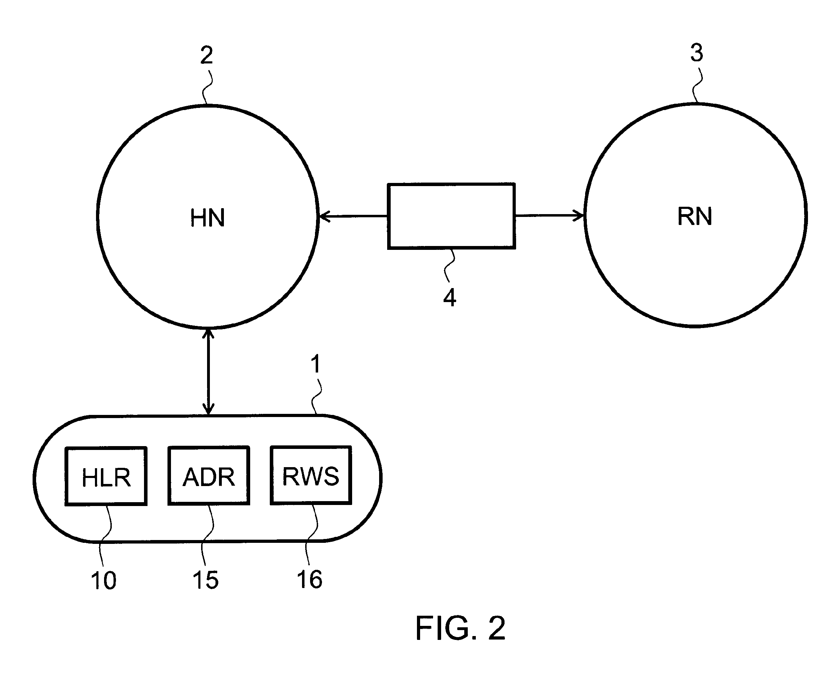

An application of the present invention is schematically illustrated in Fig. 2. A home network 2 for mobile telecommunication is shown to be connected to a roaming network 3 via an international link 4. An information supply system 1 of the present invention is coupled to the home network 2. The information supply system 1 comprises a home location register (HLR) 10, an administrative register (ADR) 15, a roaming and welcoming system (RWS) 16, as well as other components which are not shown in Fig. 2 for the sake of clarity of the illustration.

The information supply system 1 of the present invention allows information to be supplied to mobile telephone users in either the roaming network 3 or the home network 2. The information supplied may reflect the users' location as well as their telephone usage behaviour. The location detection of the system 1 does not depend on GPS (Global Positioning System), but instead uses international roaming (that is, mobile telephone use outside of the home network) and preferably also national roaming (that is, mobile telephone use within the home network) information. This roaming information preferably involves Global Title Address (GTA) information, which allows a precise location determination and hence a very precise targeting of mobile telephone users. In particular, the present invention preferably utilizes the full length of the Global Title Address, in contrast to Prior Art systems which use only part of this length.

The present invention is based upon the insight that mobile telephone user properties obtained from a home location register allow a very effective target group selection for mobile telephone user information, which target group can be further refined using administrative information as may be stored in a billing system. The present invention benefits from the further insight that additionally matching location information with desired properties allows a message to be sent when a user is at the right location, while matching a time and date information with desired properties allows a message to be sent at the right moment.

It is noted that any terms used in this document should not be construed so as to limit the scope of the present invention. In particular, the words "comprise(s)" and "comprising" are not meant to exclude any elements not specifically stated. Single elements may be substituted with multiple elements or their equivalents.

It will be understood by those skilled in the art that the present invention is not limited to the embodiments illustrated above and that many modifications and additions may be made without departing from the scope of the invention as defined in the appending claims.

## Claims

1. A method of supplying information to mobile telephone users, the method comprising the steps of:
• providing a set of first parameters reflecting desired mobile telephone user properties,
• providing a set of second parameters reflecting actual mobile telephone user properties,
• forming a target group of mobile telephone users by selecting mobile telephone users whose second parameters matches the set of first parameters, and
• transmitting a message containing the information to the mobile telephones of the target group,
wherein the actual mobile telephone user properties comprise:
• subscription properties,
• user settings, and
• location information.

2. The method according to claim 1, wherein the subscription properties and/or the user settings are obtained from a home location register (10).

3. The method according to claim 1 or 2, wherein the location information comprises both national location information obtained from the home location register (10) and international location information obtained from a roaming and welcoming system (16).

4. The method according to claim 1, 2 or 3, wherein the location information comprises Global Title Address information.

5. The method according to any of the preceding claims, further involving usage data obtained from a billing system (15).

6. The method according to any of the preceding claims, wherein the step of forming a target group includes matching a time and date criterion with the actual time and date.

7. The method according to any of the preceding claims, wherein the step of forming a target group of mobile telephone users involves skipping mobile telephone users whose usage data include a message barring indication.

8. The method according to any of the preceding claims, wherein the step of forming a target group of mobile telephone users involves skipping mobile telephone users whose usage data include a double detection indication.

9. The method according to any of the preceding claims, wherein the information is promotional information, travel information, and/or customer support information.

10. The method according to any of the preceding claims, wherein a predetermined target group is provided.

11. A computer program product for carrying out the method according to any of the preceding claims.

12. A system (1) for supplying information to mobile telephone users, the system comprising:
• a first parameters unit (11) for providing a set of first parameters reflecting desired mobile telephone user properties,
• a second parameters unit (12) for providing a set of second parameters reflecting actual mobile telephone user properties,
• a selection unit (13) for forming a target group of mobile telephone users by selecting mobile telephone users whose second parameters match the set of first parameters, and
• a transmission unit (14) for transmitting a message containing the information to the mobile telephones of the target group,
wherein the actual mobile telephone user properties comprise:
• subscription properties,
• user settings, and
• location information.

13. The system according to claim 12, wherein the subscription properties and/or the user settings are obtained from a home location register (10).

14. The system according to claim 12 or 13, wherein the location information comprises both national location information obtained from the home location register (10) and international location information obtained from a roaming and welcoming system (16).

15. The system according to any of claims 12 to 15, wherein the location information comprises Global Title Address information.

16. The system according to any of claims 12 to 15, wherein the parameters further comprise usage data obtained from a billing system (15).

17. The system according to any of claims 12 to 15, wherein the information is promotional information, customer support information and/or travel information.
